(19) Europäisches Patentamt
European Patent Office
Office européen des brevets

(11) Publication number: **0 109 525**
**B1**

(12) # EUROPEAN PATENT SPECIFICATION

(45) Date of publication of patent specification: **31.01.90**

(51) Int. Cl.$^5$: **B 01 J 20/18**

(21) Application number: **83110066.4**

(22) Date of filing: **08.10.83**

(54) **Attrition resistant molecular sieve.**

(30) Priority: **12.10.82 US 433901**

(43) Date of publication of application:
**30.05.84 Bulletin 84/22**

(45) Publication of the grant of the patent:
**31.01.90 Bulletin 90/05**

(84) Designated Contracting States:
**BE CH DE FR GB IT LI NL SE**

(56) References cited:
**US-A-2 964 461**
**US-A-3 287 472**
**US-A-3 557 531**
**US-A-4 316 819**

**CHEMICAL ABSTRACTS, vol. 90, 1979, page 120, no. 40910m, Columbus, Ohio, US; J.**

**The file contains technical information submitted after the application was filed and not included in this specification**

(73) Proprietor: **UOP**
**25 East Algonquin Road**
**Des Plaines Illinois 60017-5017 (US)**

(72) Inventor: **Acharya, Arun**
**85 Twilight Lane**
**East Amherst New York 14051 (US)**
Inventor: **BeVier, William Edgar**
**6 West Grimsby Road**
**Kenmore New York 14223 (US)**

(74) Representative: **Eggert, Hans-Gunther, Dr.**
**Räderscheidtstrasse 1**
**D-5000 Köln 41 (DE)**

(56) References cited:
**EJSYMONT et al.: "Granulation of zeolite 13X by pressing with friction-reducing substances" & ZESZ. NAUK. UNIW. JAGIELLON., PR. CHEM. 1978, 23, 173-87**

**EP 0 109 525 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to generally spherical, high porosity, friable crystalline zeolitic molecular sieves and a process for rendering a generally spherical, high porosity, friable crystalline zeolitic molecular sieve particle having a surface comprising surface irregularities more resistant to attrition.

An often used procedure for the chemical or physical alteration of material involves the passage of such material through a bed of adsorbent, catalyst, etc. depending on the intended result. When a continuous process is employed, a packed bed presents certain problems. While it is desired to have short cycle times in order to minimize bed inventory and equipment size, longer cycle times are generally more energy efficient. Furthermore, there is a need for an elaborate and expensive valve assembly for cycling various streams among various beds, which can lead to increased maintenance costs. These operating problems become more acute as one tries to minimize capital expense by reducing cycle times.

Those skilled in the art have long recognized the advantages of moving and fluidized beds over packed beds. Such advantages include greater energy efficiency because of the reduction of cyclic and transient energy losses and because of higher product recoveries. However, one problem in the use of moving and fluidized beds is excessive particle attrition caused, for example, by abrasion among bed particles, abrasion with bed walls and bed internals and distributor jet impingement and abrasion in circulation conduits to and from the bed. High particle attrition contributes to product contamination, particle loss, plugging of downstream equipment, high filtration costs, and unstable fluidization behavior such as channeling, slugging or increased entrainment.

The problem of particle attrition is especially severe with high porosity bed particles such as molecular sieves. Although molecular sieves have been widely used as the bed particle for packed beds, they have received very little attention and use for moving or fluidized bed applications because of their friability and consequently high attrition characteristics.

Those skilled in the art have made many attempts to employ molecular sieves in moving and fluidized beds. One successful approach is to form a composition containing molecular sieves but comprised mostly of clay. For example, 13× molecular sieve when used in a packed bed is generally employed in a composition containing about 80 percent sieve particles and 20 percent clay. One can reduce somewhat the attrition of such sieve material in a moving or fluidized bed by employing the material in a composition containing about 20 percent sieve material and 80 percent clay. However, as can be appreciated, such a procedure leads to much reduced efficiency for the molecular sieve material and consequently such a procedure can be practically used in only a few applications such as cracking petroleum fractions for gasoline production.

Thus, the capability to employ molecular sieves in moving and fluidized beds while keeping attrition low without a significant reduction in efficiency would be highly desirable.

It is therefore an object of this invention to provide molecular sieves which can be employed in moving and fluidized beds while exhibiting low attrition and retaining high mass transfer or reactive capabilities.

It is another object of this invention to provide a method of treating generally spherical, high porosity, friable molecular sieve particles such that they can be employed in moving and fluidized beds while exhibiting low attrition and retaining high mass transfer or reactive capabilities.

The above and other objects which will become apparent to one skilled in the art upon a reading of this disclosure are attained by the present invention, one aspect of which comprises:

A composition comprising generally spherical, high porosity crystalline zeolitic molecular sieve particles having a surface comprising surface irregularities and, adhered to the exposed surface thereof, a thin, generally uniform coating of a solid lubricant from the group consisting of graphite, molybdenum disulfide, polytetrafluoroethylene, and activated carbon in an amount of from about $1.0 \times 10^{-7}$ to $2.0 \times 10^{-3}$ gram per square centimeter of the projected surface area of said particle.

Another aspect of this invention comprises:

A process for rendering a generally spherical, high porosity, friable crystalline zeolitic molecular sieve particle having a surface comprising surface irregularities more resistant to attrition comprising coating the exposed surface of said particle with a thin, generally uniform layer of solid lubricant from the group consisting of graphite, molybdenum disulfide, polytetrafluoroethylene, and activated carbon, in an amount of from about $1.0 \times 10^{-7}$ to $2.0 \times 10^{-3}$ gram per square centimeter of the projected surface area of said particle.

Still another aspect of this invention comprises:

A process for physically or chemically altering material by passing said material through a moving or fluidized bed containing generally spherical, high porosity, crystalline zeolitic molecular sieve particles wherein said particles have adhered to their exposed surface a thin, generally uniform coating of solid lubricant of the above-mentioned kind comprising from about $1.0 \times 10^{-7}$ to $2.0 \times 10^{-3}$ gram per square centimeter of the projected surface area of said particles.

A further aspect of this invention comprises:

A process wherein a fluid is employed to transport generally spherical, high porosity crystalline zeolitic molecular sieve particles, which have adhered to their exposed surface a thin, generally uniform coating of solid lubricant of the above-mentioned kind of from about $1.0 \times 10^{-7}$ to $2.0 \times 10^{-3}$ gram per square centimeter of the projected surface area of said particle, in a moving or fluidized bed.

As used herein, the term "high porosity" means a particle having a relatively large internal surface area which is directly accessible from the particle surface.

As used herein, the term "generally spherical" means a particle having rounded edges, i.e., of generally convex contour, without sharp corners or protruding sections susceptible to easy fracture. If an attempt were made to utilize friable particles with sharp corners or protruding sections in a moving or fluidized bed the jagged edges would soon become smooth by unavoidable attrition and the particles could then be called generally spherical. As such the term "generally spherical" is not meant to be limited to an ideal or nearly ideal spherical shape. In quantitative terms, "generally spherical" may describe a particle having a projected surface area not more than three times the surface area of a sphere having the same volume as the particle.

As used herein, the term "friable" means a material which experiences excessive attrition in a moving or fluidized bed. Although the amount of attrition which is considered excessive may vary depending on the specific application, a quantitative definition of friable may be a particle that experiences an estimated yearly weight loss of 10 percent or more at a bed expansion of about 2.0 when tested under the conditions described in Example 1, infra.

As used herein, the term "moving bed" means a system whereby dual component (such as gas and particle) contact is attained for reactive, transport, or exchange purposes while both components have spacial motion relative to the vessel containing them.

As used herein, the term "fluidized bed" means a moving bed in which the fluid drag force of the fluid component causes movement of the solid component from its repose position in a manner that enhances mixing of both components in the bed. The term, fluidized, is derived from the fluid-like characteristics, such as zero angle of repose, mobility, and a pressurehead equal to the bulk density of the bed, which the bed assumes.

As used herein, the terms "external surface" and "external surface area" mean the outer surface of a particle as it is apparent to the naked eye. A stylistic representation of the external surface of a particle may be seen in Figure 4.

As used herein, the terms "projected surface" and "projected surface area" mean the smoothed out external surface area or the external surface area viewed essentially without a depth dimension. A stylistic representation of the projected surface of a particle may be seen in Figure 4.

As used herein, the terms "exposed surface" and "exposed surface area" mean the projected surface area less any portion not substantially coincident with the external surface area. A stylistic representation of the exposed surface of a particle may be seen in Figure 4.

As used herein, the terms "internal surface" and "internal surface area" mean the surface area of a particle formed by voids not perceptible to the naked eye, said voids having diameters on the order of angstroms. The internal surface area is measured on a microscopic or molecular level and includes the surface area of micropores within the structure of the molecular sieve molecules and macropores formed between the molecules.

Figure 1 is a representation of the apparatus used to evaluate several embodiments of the composition of this invention for attrition resistance.

Figure 2 is a graph representing the results of nitrogen adsorption characteristics in tests of Example 5.

Figure 3 is a graph representing the results of carbon dioxide adsorption characteristics in tests of Example 5.

Figure 4 is a stylistic representation of a cross section of four molecular sieve particles illustrating the external surface, the projected surface and the exposed surface of each particle.

Molecular sieves are known in the art by various names such as crystalline aluminosilicates and crystalline zeolites; they generally refer to a class of hydrated metal aluminosilicate shaving a crystalline structure composed of an assembly of silicon and aluminum atoms yielding a precisely defined pore structure. The basic formula for crystalline zeolites may be represented as follows:

$$M_{2/n}O:Al_2O_3:q\ SiO_2:r\ H_2O$$

where "M" represents a metal cation, "n" its valence and q and r are coefficients. The various zeolites are distinguished by their silica-to-alumina ratio (i.e., the value of q) and by the exchangeable cation (M) present in the pore structure. Zeolites may be naturally occurring such as arionite, clinoptilolite, faujasite and mordenite or they may be man-made such as zeolite A, zeolite X and zeolite Y. Those skilled in the art are familiar with the specific chemical formula for these and the other known zeolites.

Generally, synthetic molecular sieve crystals are commercially available in ultrafine powder form in a size range of from about 0.02 to 0.8 mil (0.5 to 20 microns). Generally spherical molecular sieve particles useful in this invention may be prepared by pressing or extruding the molecular sieve crystals in powder form with a binder which is generally a clay material such as halloysite dealkalized bentonite, ball clay and kaolin as described in U.S. 3,219,590 — Ribaud. Generally spherical molecular sieve particles useful in this invention may also be prepared by the "in situ" crystallization or conversion of a preformed clay particle to zeolite material as described in Breck, D.W., *Zeolite Molecular Sieves,* John Wiley & Sons, New York, 1974, pages 725—755. Those skilled in the art may be aware of other methods to obtain generally spherical molecular sieve particles useful in this invention.

The generally spherical molecular sieve particles useful in this invention may have any useful and effective particle size which, as is known to those in the art, will be determined in part by such parameters as the density of the particles, the fluidization medium and the desired fluidization conditions. Typically, particle sizes are less than about 0.25 inch (0.64 centimeter).

The molecular sieve particles useful in this invention have a high porosity, i.e., possess an internal surface area greater than about 300 square meters per gram. The porosity of particles may be determined by a number of techniques known to those skilled in the art such as described in Gregg and Sing, *Adsorption Surface Area in Porosity,* Academic Press, 1967, New York, page 49 etc. or Young and Crowell, *Physical Adsorption of Gases,* Butterworth and Co., Ltd., 1962, Washington, page 182 etc. The micropores, those pores whose diameters are from about 1 to 1000 angstroms, provide the requisite area for activity such as adsorption or catalysis, while the macropores, generally those pores having diameters greater than about 1000 angstroms, insure that there is sufficient surface porosity to provide a strong bond between the particle and the solid lubricant. Typically, micropores having a diameter under about 20 angstroms may account for about 95 percent of the total internal surface area of a given sample of molecular sieve.

The generally spherical, high porosity molecular sieve particles useful in this invention are coated on their exposed surface by a thin, generally uniform layer of solid lubricant from the group consisting of graphite, molybdenum disulfide, polytetrafluoroethylene and activated carbon.

The lubricant coating is applied to the exposed surface of the molecular sieve particles in a thin, generally uniform layer. The lubricant is applied to the molecular sieve particle in an amount of from about $1.0\times10^{-7}$ to $2.0\times10^{-3}$ gram per square centimeter of particle projected surface area, preferably from about $1.0\times10^{-7}$ to $1.0\times10^{-3}$ gram per square centimeter, most preferably from about $1.0\times10^{-7}$ to $3.0\times10^{-4}$ gram per square centimeter. Below about $1.0 \times 10^{-7}$ grams per square centimeter the lubricant may not be present in an amount to effectively reduce attrition, while above $2.0 \times 10^{-3}$ grams per square centimeter the lubricant may tend to impair the activity of the molecular sieve particle and also may be itself easily attrited during the operation of the moving or fluidized bed. Although it may be desirable to apply the coating in an amount only slightly greater than the least amount shown to be effective, because the coating does eventually wear off, it may therefore become a matter of practicality to coat the particles with somewhat more than the minimum required, without exceeding the maximum determined by mass transfer considerations, so that the particles need not be frequently removed from the bed for recoating.

For a clearer understanding of what is meant by external surface, projected surface and exposed surface, reference is made to Figure 4 which represents stylistically four molecular sieve shapes in cross-section or in two dimensions. The external surface is that surface which is apparent to the naked eye and is represented in Figure 4 by the solid line. The projected surface is the "smoothed out" external surface and is represented in Figure 4 by the dashed line. The exposed surface is the surface upon which the coating is applied and is the surface which is essentially coincidental to the external and projected surfaces. The exposed surface is represented in Figure 4 by the combination of thin solid and heavy dashed line. Although this invention comprises the coating of the exposed surface, one may also coat the external surface which is not coincidental with the projected surface. However such coating is not necessary to achieve the beneficial results obtained.

The solid lubricant may be applied to the exposed surface of the molecular sieve particles in any effective manner which will not result in the deposition of lubricant in significant amounts in the internal pore structure, i.e., on the internal surface, of the porous particles. One method of effectively applying the solid lubricant coating to the molecular sieve particle exposed surface is rolling the porous sieve particles in a drum or other roll mill means containing an appropriate weight of the lubricant, preferably in powder form. Another method of effectively applying the solid lubricant coating to the molecular sieve particle exposed surface is to continuously apply the lubricant to the particles within the moving or fluidized bed. Such in situ coating is possible, for example, by mixing the porous particles with a lubricant-supplying pellet, such as beaded activated carbon, i.e. BAC, which slowly erodes and concomitantly coats the porous particles with a lubricant layer during operation of the bed. It is believed that when beaded activated carbon is used to apply the coating in such in situ case, the solid lubricant applied is graphite derived from the partially graphitic structure of this type of activated carbon.

The present invention comprises the surprising discovery that a thin coating with a specific lubricant on the exposed surface of a generally spherical, high porosity crystalline zeolitic molecular sieve particle will significantly reduce attrition when the particle is employed in moving or fluidized bed conditions. It is surprising that the thin lubricant coating is effective and also stable, i.e. adherent, under the violent conditions in moving and fluidized beds. Were a thick layer of lubricant required to provide the requisite attrition resistance, the resulting imposition of high mass transfer resistance would adversely affect the activity of the molecular sieve particles. Were the thin layer of lubricant not stable, i.e. adherent, under moving or fluidized bed conditions, then high lubricant attrition would merely replace high particle attrition resulting in problems similar to those encountered when uncoated friable molecular sieve particles are used in moving or fluidized beds. While not wishing to be bound by any theory, applicants believe that this serendipitous bonding characteristic is, in significant degree, due to microscopic surface irregularities which are inherent in high porosity molecular sieve particles. Because of these surface irregularities, the bond between the lubricant and the porous molecular sieve substrate occurs over a larger area than would be the case for a microscopically smooth substrate. This larger contact area results in a larger bonding

force thus allowing the use of a thin coating of lubricant to provide the requisite attrition resistance.

The coated, generally spherical, high porosity molecular sieve particles of this invention may be advantageously employed in a great many processes wherein material is chemically or physically altered by passage through a moving or fluidized bed, such as in adsorption and catalysis. Such processes also include drying, bulk separation of gases, vapors or liquids, and gas or liquid purification. Specific examples of such applications include fluidized catalytic cracking of oil to produce gasoline, removing carbon dioxide from air, removing water from compressed air, increasing the percentage of hydrogen in a waste stream, isomer separation, removing hydrocarbon solvents from air exhausted from paint booths or dry cleaning booths, bulk removal of reactants from plant streams with subsequent recycle, removal of trace contaminants from chemical plant vent streams, and producing oxygen by separating it from nitrogen in air.

In addition to achieving increased attrition resistance for molecular sieves when used in moving or fluidized beds, while not subjecting the sieves to lower activity, the present invention has a number of other advantages. For example, because the coated molecular sieve particles are less constrained by friction than uncoated particles, the rate of circulation, or material flow rate, within the bed is improved. This enhances interaction of the particles with the fluid. Moving and fluidized beds employing coated bed particles exhibit less wear on bed internals and auxiliary equipment, such as seals, so that system life and reliability are improved. This reduction in abrasion due to the reduction in frictional forces is attributable to the lubrication imparted by the coated particles to the system parts as well as to the coating on the particles themselves. Furthermore, less pressure is required to transport the materials, for example in an entrained bed, because of the lubrication, so the system energy consumption is reduced. Although the improvement would not be expected to be as dramatic as in moving beds, the present invention may also be employed in fixed beds to reduce attrition and improve packing.

The following examples serve to further illustrate the present invention. They are not intended to limit the present invention in any way.

Example 1

Embodiments of the composition of this invention were evaluated using the test apparatus shown in Figure 1. Referring now to Figure 1, the fluidized bed test apparatus comprises a 2.54 cm diameter glass tube 1 having an overall length of about 38 centimeters. A porous ceramic plug 2 in the bottom of tube 1 serves as a gas distributor. The composition 3 to be tested is supported on ceramic plug 2 at an unfluidized height of about 5 centimeters. A glass U-tube 4 is connected to the top of tube 1 and a very fine porosity paper thimble or filter 5, encased within a polyethylene bag 6, is connected to the other end of tube 4. Bag 6 is attached in a way that allows the fluidizing gas to be quiescently vented from the apparatus and is used to hermetically enclose filter 5 prior to mass measurements to prevent weight gain caused by the adsorption of atmospheric moisture.

An embodiment of the composition of this invention was prepared by blending commercially available 13× molecular sieves which were generally spherical 4.76 × 2.38 mm (4 × 8 mesh) size, (all mesh sizes referred to herein are with reference to ASTM—11) and 0.044 mm (325 mesh) graphite powder having a particle size less than 43 microns (0.0017 inch) and rolling the blended mixture in a drum for about 16 hours to obtain molecular sieve particles having their exposed surface coated with a thin, generally uniform film of solid lubricant in an amount of about 0.154 weight percent based on the weight of the uncoated particle or about $1.81 \times 10^{-4}$ gram per square centimeter of particle projected surface area. The calculation from weight percent to weight per unit projected surface area is made assuming the particles are perfect spheres and an even distribution of particle size. The coated particles were placed in the test apparatus and dry nitrogen gas was introduced into the bottom of tube 1 to fluidize the bed at an expansion ratio of about 2.25 and a relative fluidization velocity of 1.50. The expansion ratio is the ratio of fluidized bed volume to unfluidized bed volume. Because of the transient nature of the fluidized bed height, the expansion ratio is taken as the time-average of the above-named volumes. The relative fluidization velocity is the ratio of the fluidizing gas velocity to the minimum velocity required to fluidize the bed. The evaluation was conducted for four weeks during which the dust produced by attrition of the particles in the bed was collected in filter 5. After this time the dust was weighed by subtracting the pre-test weight of the filter from the post-test weight and the percent yearly weight loss of the particles was calculated by multiplying the four week percent loss by 13. The compositions of this invention exhibited a yearly weight loss of only 0.86 percent.

For comparative purposes a procedure similar to that described above was carried out without coating the 13× molecular sieve particles. In this comparative example the bed expansion ratio was about 2.19 and the relative fluidization velocity was 1.50. The uncoated particles exhibited a yearly weight loss of 41.25 percent.

This example clearly demonstrates that the compositions of this invention are much more attrition resistant than uncoated commercially available molecular sieves. In this example the attrition of the uncoated sieve particles was fifty times that of the sieve particles of this invention.

Example 2

Using the apparatus described in Example 1 a procedure similar to that of Example 1 was repeated five times using either 2.38 × 1.68 mm (8×12 mesh)13X, 1.19 × 0.42 mm (16×40 mesh)13X, or 1.19 × 0,42 mm

(16×40 mesh)4A molecular sieves. The amount of coating on the exposed surface of the particles is reported in gram per square centimeter of particle projected surface area. The results are shown in Table I.

For comparative purposes a procedure similar to that of Example 1 was repeated four times but without coating the particles. These results are also reported in Table I.

TABLE I

| Molecular Sieve (size/type) | Coating ($gm/cm^2$) | Expansion Ratio | Rel. Fluidization Velocity | Yearly Loss (wt %) |
|---|---|---|---|---|
| 2.38 × 1.68 mm (8×12), 13X | $2.57\times10^{-5}$ | 1.21 | 1.53 | 0.32 |
| 1.19 × 0.42 mm (16×40), 13X | $4.13\times10^{-5}$ | 1.51 | 1.66 | 0.28 |
| 1.19 × 0.42 mm (16×40), 13X | $4.13\times10^{-5}$ | 1.87 | 2.01 | 0.75 |
| 1.19 × 0.42 mm (16×40), 4A | $1.37\times10^{-4}$ | 1.23 | 1.51 | 0.95 |
| 1.19 × 0.42 mm (16×40), 4A | $1.37\times10^{-4}$ | 1.47 | 1.84 | 3.62 |
| 1.19 × 0.42 mm (16×40), 13X | none | 1.09 | 1.30 | 8.28 |
| 1.19 × 0.42 mm (16×40), 13X | none | 1.77 | 6.23 | 54.5 |
| 1.19 × 0.42 mm (16×40), 13X | none | 2.83 | 13.78 | 68.15 |
| 1.19 × 0.42 mm (16×40), 13X | none | 3.64 | 19.90 | 89.62 |

This example again clearly demonstrates the superior attrition resistance of the compositions of this invention over that exhibited by commercially available molecular sieves.

Experiment A

Using the apparatus described in Example 1, a procedure similar to that of Example 1 was carried out using alumina silicate in place of the 13X molecular sieves used in Example 1. The alumina silicate particles had diameters of one-eighth inch or less and were granular, i.e., they were not generally spherical. One evaluation was carried out with uncoated particles at an expansion ratio of about 1.24 and a relative fluidization velocity of 2.46. The uncoated particles exhibited a yearly weight loss of 30.77 percent. Another evaluation was carried out using alumina silicate particles which had been coated with about 1.499 weight percent of graphite powder or about $1.59 \times 10^{-3}$ gram per square centimeter of projected surface area using a procedure similar to that described in Example 1. The expansion ratio was about 1.17, the relative fluidization velocity was 2.78 and the yearly weight loss was 71.7 weight percent. This experiment indicates that the process of this invention to increase the attrition resistance of generally spherical molecular sieves is not effective on granular alumina silicate.

Experiment B

Using the apparatus described in Example 1, a procedure similar to that of Example 1 was carried out using generally spherical alumina A201 particles having a size of 4 × 2.38 mm (5×8 mesh) in place of the 13X molecular sieves used in Example 1. Alumina A201 is a well known adsorbent. One evaluation was carried out with uncoated particles at an expansion ratio of about 1.31 and a relative fluidization velocity of 1.34. The uncoated particles exhibited a yearly weight loss of 158.26 percent. Another evaluation was carried out using alumina A201 particles which had been coated with 0.154 weight percent of graphite powder or about $1.64 \times 10^{-4}$ gram per square centimeter of projected surface area using a procedure similar to that described in Example 1. The expansion ratio was about 1.64, the relative fluidization velocity was 1.62 and the yearly weight loss was 624.13 percent. This experiment indicates that the process of this invention to increase the attrition resistance of molecular sieves is not effective on all adsorbents.

Experiment C

Using the apparatus described in Example 1, a procedure similar to that of Example 1 was carried out using granular quartz sand particles having a 20×30 mesh (0.84×0.59 mm) size in place of the 13X molecular sieves used in Example 1. Quartz sand is hard and essentially non-friable. One evaluation was carried out with uncoated particles at an expansion ratio of about 1.52 and a relative fluidization velocity of 1.39. The uncoated particles exhibited a yearly weight loss of 0.96 percent. Another evaluation was carried out using quartz sand particles which had been coated with 0.308 weight percent of graphite powder or about $7.37 \times 10^{-4}$ gram per square centimeter of projected surface area using a procedure similar to that

described in Example 1. The expansion ratio was about 1.46, the relative fluidization velocity was 1.27 and the yearly weight loss was 2.20 percent. This experiment indicates that the process of this invention to increase the attrition resistance of generally spherical, friable molecular sieves does not increase the attrition resistance of material that is non-friable and granular.

Example 3

Using the apparatus described in Example 1, a procedure similar to that of Example 1 was carried out twice using 20 × 35 mesh (0.84 × 0.5 mm) 13X molecular sieves but employing 325 mesh (0.044 mm) molybdenum disulfide and polytetrafluoroethylene powder respectively as the solid lubricant coating in place of the graphite powder used in Example 1. The amount of coating on the exposed surface of the particles is reported in gram per square centimeter of particle projected surface area. The results, which are shown in Table II demonstrate that solid lubricants other than graphite are effective for use in the process and composition of this invention.

TABLE II

| Coating | gram/cm$^2$ | Expansion Ratio | Rel. Fluidization Velocity | Yearly Loss (Wt.%) |
|---|---|---|---|---|
| Molybdenum Disulfide | $1.74 \times 10^{-5}$ | 1.23 | 1.56 | 1.06 |
| Poly-tetrafluoro-ethylene | $4.11 \times 10^{-5}$ | 1.50 | 1.48 | 0.68 |

Example 4

Using the apparatus described in Example 1, a procedure similar to that of Example 1 was carried out four times using 20 × 35 mesh (0.84 × 0.5 mm) 13X molecular sieve particles. However, in this Example 4 the sieve particles were not coated by rolling with solid lubricant particles in a drum. Instead the sieve particles were mixed with solid lubricant particles and the mixture was used as the bed such that the sieve particles were coated in situ by material eroded from the lubricant particles as the process was carried out. In each of the four runs of this Example 4 the solid lubricant employed was 20 × 35 mesh (0.84 × 0.5 mm) spherical activated carbon. In Run A the bed mixture comprised 5 weight percent lubricant and 95 weight percent sieve particles. In Run B the lubricant concentration in the mixture was 10 weight percent, in Run C it was 25 weight percent and in Run D it was 50 weight percent.

In order to verify that the molecular sieve particles were being effectively coated in situ and that the process was leading to the low attrition observed in Runs A—D, the sieve material used in run B was separated from the mixture and used in an evaluation using a test procedure similar to that of Example 1. The results of this evaluation are reported in Table III as Run E.

The results shown in Table III demonstrate that solid lubricant can be coated onto molecular sieve particles in a moving or fluidized bed in order to attain attrition resistant molecular sieve compositions of this invention.

TABLE III

| Run | Composition (wt. %) Act. Car.,Sieve | Expansion Ratio | Rel. Fluidization Velocity | Yearly Loss (wt. %) |
|---|---|---|---|---|
| A | 5,95 | 1.53 | 1.99 | 0.27 |
| B | 10,90 | 1.21 | 1.89 | 0.47 |
| C | 25,75 | 1.46 | 2.15 | 0.58 |
| D | 50,50 | 1.43 | 1.88 | 0.69 |
| E | — | 1.17 | 1.45 | 0.02 |

Example 5

Three embodiments of the composition of this invention were prepared. Embodiment A was prepared by coating 20 × 35 mesh (0.84·0.5 mm)13X molecular sieve particles with 325 mesh (0.044 mm) graphite powder following a procedure similar to that of Example 1. The thin, generally uniform coating was applied to the exposed surface in an amount of about 0.154 weight percent of the particle or about $4.11 \times 10^{-5}$ gram per square centimeter of projected surface area. Embodiment B was prepared by coating 20 × 35 mesh (0.84 × 0.5 mm)13X molecular sieve particles with 325 mesh (0.044 mm) molybdenum disulfide following a procedure similar to that of Example 1 such that each particle had a thin, generally uniform exposed surface coating of about 0.152 weight percent of the particle or about $4.06 \times 10^{-5}$ gram per square centimeter of projected surface area. Embodiment C was prepared by the in situ coating of 20 × 35 mesh (0.84·0.5 mm)13X molecular sieve particles with 20 × 35 mesh (0.84·0.5 mm) spherical activated carbon following a procedure similar to that of Example 4. The in situ bed mixture comprised 90 weight percent sieve particles and 10 weight percent activated carbon.

Each embodiment was preliminarily activated by initial evacuation at ambient temperature followed by continuous evacuation while heating to about 350°C and continued additional evacuation for about 8 hours at the elevated temperature. After such activation each embodiment was cooled and tested for nitrogen and carbon dioxide adsorption characteristics by passing the gas through the bed. A Sartorius pressure microbalance system was used to obtain the data.

The test for the adsorption of nitrogen was carried out at 22°C and 1189 torr. The results are represented graphically in Figure 2. For comparative purposes the adsorption characteristics of uncoated 20 × 35 mesh (0.84·0.5 mm)13X molecular sieve particles were also evaluated following the same procedure and these results are also reported in Figure 2.

The test for the adsorption of carbon dioxide was carried out at 22°C and 10 torr. The results are represented graphically in Figure 3. The results for embodiment C are not reported because equipment malfunction resulted in unrepresentative and unreliable data. For comparative purposes the adsorption characteristics of uncoated 0.84 × 0.5 mm (20 × 35 mesh)13X molecular sieve particles were also evaluated following the same procedure and these results are also reported in Figure 3.

As can be seen from Figures 2 and 3, the composition of this invention exhibits comparable or superior activity to uncoated molecular sieve particles. Thus, the composition of this invention retains the advantageous activity of commercially available molecular sieves while increasing the attrition resistance of molecular sieves to a significant degree. Such an increase in attrition resistance without a decrease in activity is completely unexpected.

Now by the use of the composition and process of this invention one can easily and efficiently employ molecular sieves in a moving or fluidized bed process while avoiding high maintenance costs due to attrition and without suffering a significant loss in bed activity.

**Claims**

1. A composition comprising generally spherical, high porosity crystalline zeolitic molecular sieve particles having a surface comprising surface irregularities and, adhered to the exposed surface thereof, a thin, generally uniform coating of a solid lubricant from the group consisting of graphite, molybdenum disulfide, polytetrafluoroethylene, and activated carbon in an amount of from about $1.0 \times 10^{-7}$ to $2.0 \times 10^{-3}$ gram per square centimeter of the projected surface area of said particle.

2. The composition of claim 1 wherein said amount is from about $1.0 \times 10^{-7}$ to $1.0 \times 10^{-3}$ gram per square centimeter.

3. The composition of claim 1 wherein said amount is from $1.0 \times 10^{-7}$ to $3.0 \times 10^{-4}$ gram per square centimeter.

4. The composition of claim 1 wherein said molecular sieve particle comprises 13X molecular sieve.

5. The composition of claim 1 wherein said molecular sieve particle comprises 4A molecular sieve.

6. A process for rendering a generally spherical, high porosity, friable crystalline zeolitic molecular sieve particle having a surface comprising surface irregularities more resistant to attrition comprising coating the exposed surface of said particle with a thin, generally uniform layer of solid lubricant from the group consisting of graphite, molybdenum disulfide, polytetrafluoroethylene, and activated carbon, in an amount of from about $1.0 \times 10^{-7}$ to $2.0 \times 10^{-3}$ gram per square centimeter of the projected surface area of said particle.

7. The process of claim 6 wherein said amount is from $1.0 \times 10^{-7}$ to $1.0 \times 10^{-3}$ gram per square centimeter.

8. The process of claim 6 wherein said amount is from $1.0 \times 10^{-7}$ to $3.0 \times 10^{-4}$ gram per square centimeter.

9. The process of claim 6 wherein said molecular sieve particle comprises 13X molecular sieve.

10. The process of claim 6 wherein said molecular sieve particle comprises 4A molecular sieve.

11. The process of claim 6 wherein said layer is applied by combining sieve particles and solid lubricant in roll mill means and rolling the resulting mixture.

12. The process of claim 6 wherein said layer is applied by combining sieve particles and solid lubricant in a bed and operating the bed in a moving or fluidized condition.

13. The process of claim 12 wherein the solid lubricant is in pellet form.

14. A process for physically or chemically altering material by passing said material through a moving or fluidized bed containing generally spherical, high porosity crystalline zeolitic molecular sieve particles according to claim 1.

15. The process of claim 14 wherein said amount is from about $1.0 \times 10^{-7}$ to $1.0 \times 10^{-3}$ gram per square centimeter.

16. The process of claim 14 wherein said amount is from about $1.0 \times 10^{-7}$ to $3.0 \times 10^{-4}$ gram per square centimeter.

17. The process of claim 14 wherein said molecular sieve particle comprises 13X molecular sieve.

18. The process of claim 14 wherein said process is adsorption.

19. A process wherein a fluid is employed to transport generally spherical high porosity crystalline zeolitic molecular sieve particles according to claim 1 in a moving or fluidized bed.

20. The process of claims 14 or 19 wherein some of said solid lubricant is imparted to surfaces of bed internals or auxiliary equipment.

**Patentansprüche**

1. Zusammensetzung enthaltend im wesentlichen kugelförmige kristalline zeolithische Molekularsiebpartikel mit hoher Porosität mit einer Oberfläche, die Oberflächen-Unregelmäßigkeiten aufweist und mit einer dünnen im wesentlichen einheitlichen Beschichtung, die auf deren exponierter Oberfläche haftet, aus einem festen Gleitmittel ausgewählt aus der Gruppe bestehend aus Graphit, Molybdändisulfid, Polytetrafluorethylen und Aktivkohle, in einer Menge von etwa $1{,}0 \times 10^{-7}$ bis $2{,}0 \times 10^{-3}$ g/cm$^2$ der Projektionsoberfläche dieses Partikels.

2. Zusammensetzung nach Anspruch 1 in der diese Menge von etwa $1{,}0 \times 10^{-7}$ bis $1{,}0 \times 10^{-3}$ g/cm$^2$ beträgt.

3. Zusammensetzung nach Anspruch 1 in der diese Menge von $1{,}0 \times 10^{-7}$ bis $3{,}0 \times 10^{-4}$ g/cm$^2$ beträgt.

4. Zusammensetzung nach Anspruch 1 in der die Molekularsiebpartikel 13X Molekularsieb enthalten.

5. Zusammensetzung nach Anspruch 1 in der die Molekularsiebpartikel 4A Molekularsieb enthalten.

6. Verfahren zur Erhöhung der Abriebfestigkeit eines im wesentlichen kugelförmigen zerreibbaren kristallinen zeolithischen Molekularsiebpartikels hoher Porosität mit einer Oberfläche, die Oberflächenunregelmäßigkeiten aufweist, umfassend das Beschichten der exponierten Oberfläche dieses Partikels mit einer dünnen im wesentlichen einheitlichen Schicht eines festen Gleitmittels ausgewählt aus der Gruppe bestehend aus Graphit, Molybdändisulfid, Polytetrafluorethylen und Aktivkohle in einer Menge von etwa $1{,}0 \times 10^{-7}$ bis $2{,}0 \times 10^{-3}$ g/cm$^2$ der Projektionsoberfläche dieses Partikels.

7. Verfahren nach Anspruch 6, bei dem diese Menge von $1{,}0 \times 10^{-7}$ bis $1{,}0 \times 10^{-3}$ g/cm$^2$ beträgt.

8. Verfahren nach Anspruch 6, bei dem diese Menge von $1{,}0 \times 10^{-7}$ bis $3{,}0 \times 10^{-4}$ g/cm$^2$ beträgt.

9. Verfahren nach Anspruch 6, bei dem das Molekularsiebpartikel 13X Molekularsieb enthält.

10. Verfahren nach Anspruch 6, bei dem das Molekularsiebpartikel 4A Molekularsieb enthält.

11. Verfahren nach Anspruch 6, bei dem diese Schicht aufgrebracht wird durch miteinander in Kontakt bringen der Molekularsiebpartikel und des festen Gleitmittels in einer Walzenmühle und Wälzen des erhaltenen Gemischs.

12. Verfahren nach Anspruch 6, bei dem die Schicht durch in Kontakt bringen der Molekularsiebpartikel und des festen Gleitmittels in einem Bett und Betrieb dieses Betts unter Bewegt-oder Fließbettbedingungen aufgrebracht wird.

13. Verfahren nach Anspruch 12, bei dem das feste Gleitmittel in Pelletform vorliegt.

14. Verfahren zur physikalischen oder chemischen Veränderung eines Stoffs durch Hindurchleiten dieses Stoffs durch ein Bewegt- oder Fließbett, das im wesentlichen kugelförmige kristalline zeolithische Molekularsiebpartikel mit hoher Porosität gemäß Anspruch 1 enthält.

15. Verfahren nach Anspruch 14, bei dem die Menge von etwa $1{,}0 \times 10^{-7}$ bis $1{,}0 \times 10^{-3}$ g/cm$^2$ beträgt.

16. Verfahren nach Anspruch 14, bei dem die Menge von etwa $1{,}0 \times 10^{-7}$ bis $3{,}0 \times 10^{-4}$ g/cm$^2$ beträgt.

17. Verfahren nach Anspruch 14, bei dem die Molekularsiebpartikel 13X Molekularsieb enthalten.

18. Verfahren nach Anspruch 14, das ein Adsorptionsverfahren ist.

19. Verfahren bei dem ein Fluid verwendet wird, um im wesentlichen kugelförmige kristalline zoelithische Molekularsiebpartikel mit hoher Porosität gemäß Anspruch 1 in einem Bewegt- oder Fließbett zu transportieren.

20. Verfahren nach Anspruch 14 oder 19, bei dem ein Teil des festen Gleitmittels auf Oberflächen des Bettinneren oder Hilfseinrichtungen aufgebracht wird.

**Revendications**

1. Composition comprenant des particules généralement sphériques de tamis moléculaire zéolitique cristallin de haute porosité, ayant une surface présentant des irrégularités, et, fixé à la surface exposée de ces particules, un revêtement mince, généralement uniforme, d'un lubrifiant solide choisi dans le groupe comprenant le graphite, le disulfure de molybdène, le polytétrafluoréthylène et le charbon actif en une

quantité d'environ 1,0 × $10^{-7}$ à 2,0 × $10^{-3}$ gramme par centimètre carré de la superficie projetée de ladite particule.

2. Composition suivant la revendication 1, dans laquelle la quantité est comprise dans l'intervalle d'environ 1,0 × $10^{-7}$ à 1,0 × $10^{-3}$ gramme par centimètre carré.

3. Composition suivant la revendication 1, dans laquelle la quantité est comprise dans l'intervalle de 1,0 × $10^{-7}$ à 3,0 × $10^{-4}$ gramme par centimètre carré.

4. Composition suivant la revendication 1, dans laquelle la particule de tamis moléculaire consiste en tamis moléculaire 13X.

5. Composition suivant la revendication 1, dans laquelle la particule de tamis moléculaire consiste en tamis moléculaire 4A.

6. Procédé pour rendre une particule généralement sphérique de tamis moléculaire zéolitique cristallin friable, de haute porosité, ayant une surface présentant des irrégularités, plus résistante à l'attrition, consistant à revêtir la surface exposée de ladite particule avec une couche mince, généralement uniforme, de lubrifiant solide choisi dans le groupe comprenant le graphite, le disulfure de molybdène, le polytétrafluoréthylène et le charbon actif, en une quantité d'environ 1,0 × $10^{-7}$ à 2,0 × $10^{-3}$ gramme par centimètre carré de la superficie projetée de ladite particule.

7. Procédé suivant la revendication 6, dans lequel la quantité est comprise dans l'intervalle de 1,0 × $10^{-7}$ à 1,0 × $10^{-3}$ gramme par centimètre carré.

8. Procédé suivant la revendication 6, dans lequel la quantité est comprise dans l'intervalle de 1,0 × $10^{-7}$ à 3,0 × $10^{-4}$ gramme par centimètre carré.

9. Procédé suivant la revendication 6, dans lequel la particule de tamis moléculaire consiste en tamis moléculaire 13X.

10. Procédé suivant la revendication 6, dans lequel la particule de tamis moléculaire consiste en tamis moléculaire 4A.

11. Procédé suivant la revendication 6, dans lequel la couche est appliquée en mélangeant des particules de tamis et de lubrifiant solide dans un dispositif de laminage et en soumettant à un roulement le mélange résultant.

12. Procédé suivant la revendication 6, dans lequel la couche est appliquée en mélangeant des particules de tamis et le lubrifiant solide en un lit et en faisant fonctionner le lit à l'état mobile ou fluidisé.

13. Procédé suivant la revendication 12, dans lequel le lubrifiant solide est sous forme de pastilles.

14. Procédé pour modifier physiquement ou chimiquement une matière en faisant passer ladite matière à travers un lit mobile ou fluidisé contenant des particules généralement sphériques de tamis moléculaire zéolitique cristallin de haute porosité, suivant la revendication 1.

15. Procédé suivant la revendication 14, dans lequel la quantité est comprise dans l'intervalle d'environ 1,0 × $10^{-7}$ à 1,0 × $10^{-3}$ gramme par centimètre carré.

16. Procédé suivant la revendication 14, dans lequel la quantité est comprise dans l'intervalle d'environ 1,0 × $10^{-7}$ à 3,0 × $10^{-4}$ gramme par centimètre carré.

17. Procédé suivant la revendication 14, dans lequel la particule de tamis moléculaire consiste en tamis moléculaire 13X.

18. Procédé suivant la revendication 14, qui consiste en un procédé d'adsorption.

19. Procédé dans lequel un fluide est utilisé pour transporter des particules généralement sphériques de tamis moléculaire zéolitique cristallin de haute porosité suivant la revendication 1 dans un lit mobile ou fluidisé.

20. Procédé suivant la revendication 14 ou 19, dans lequel une certaine quantité du lubrifiant solide est appliquée à des surfaces de zones intérieures du lit ou d'un appareillage auxiliaire.

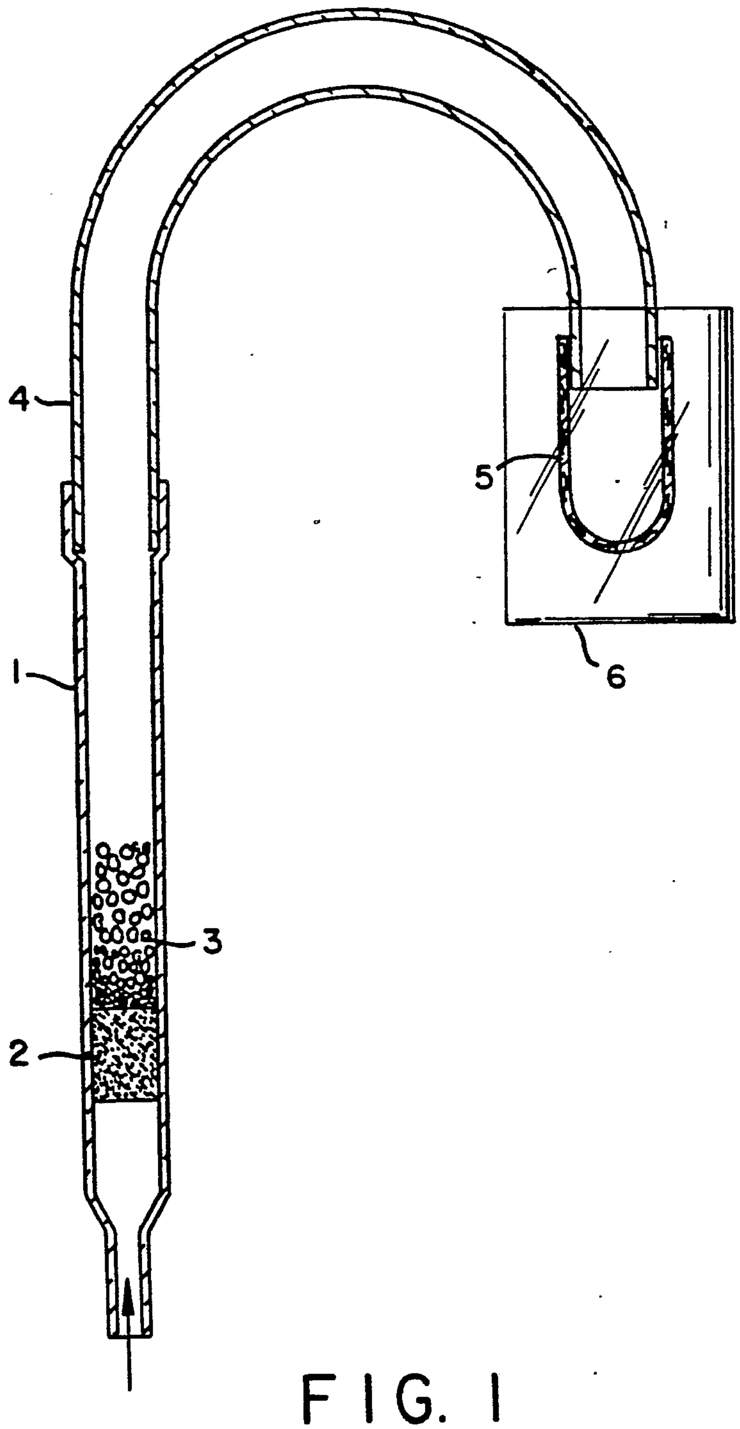


FIG. 1

FIG. 2

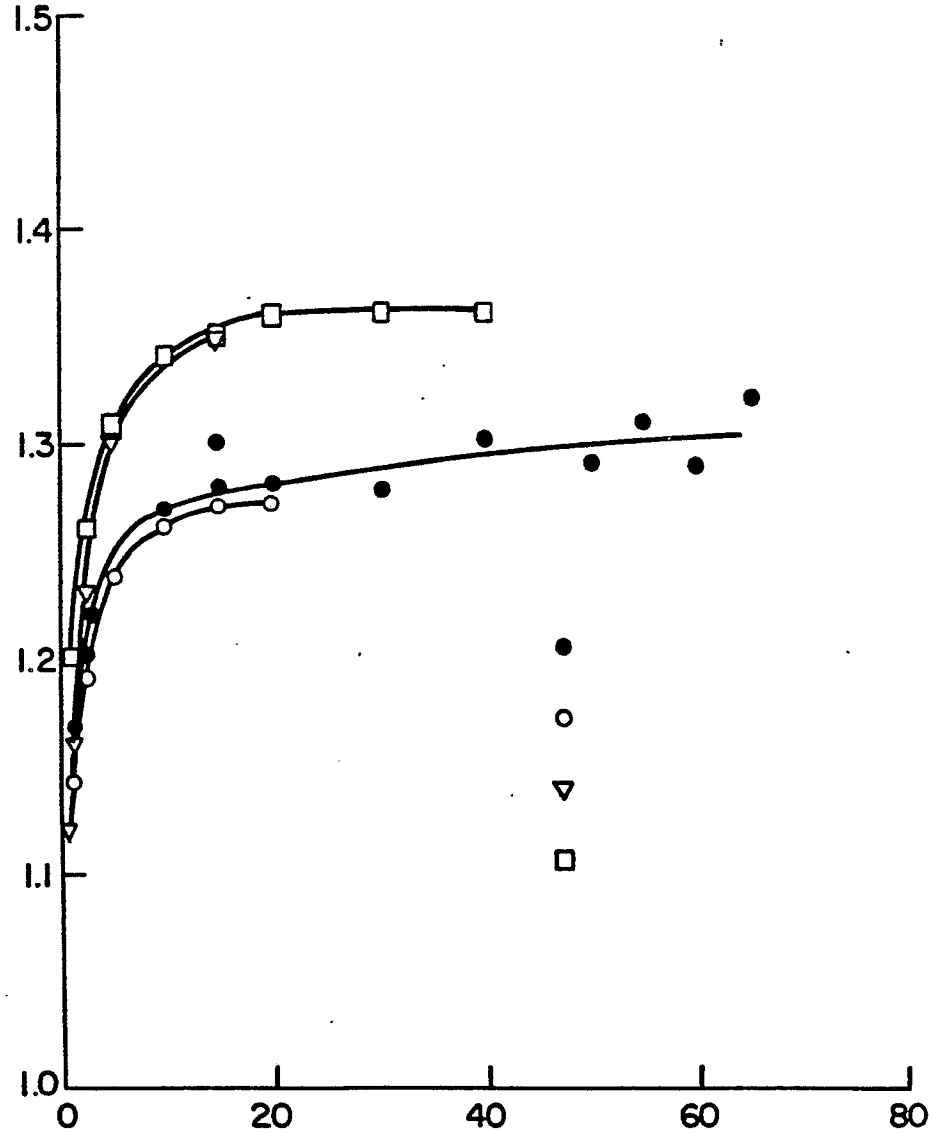

FIG. 3

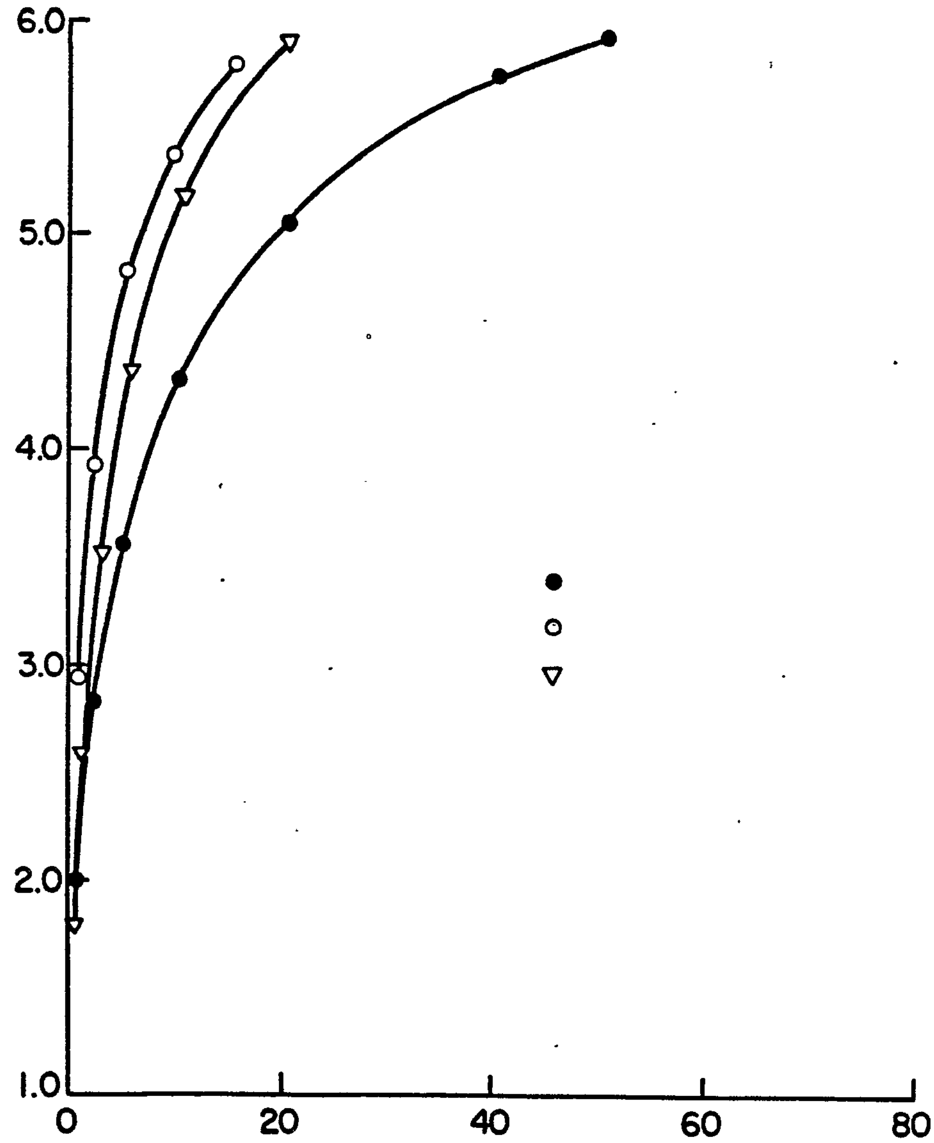

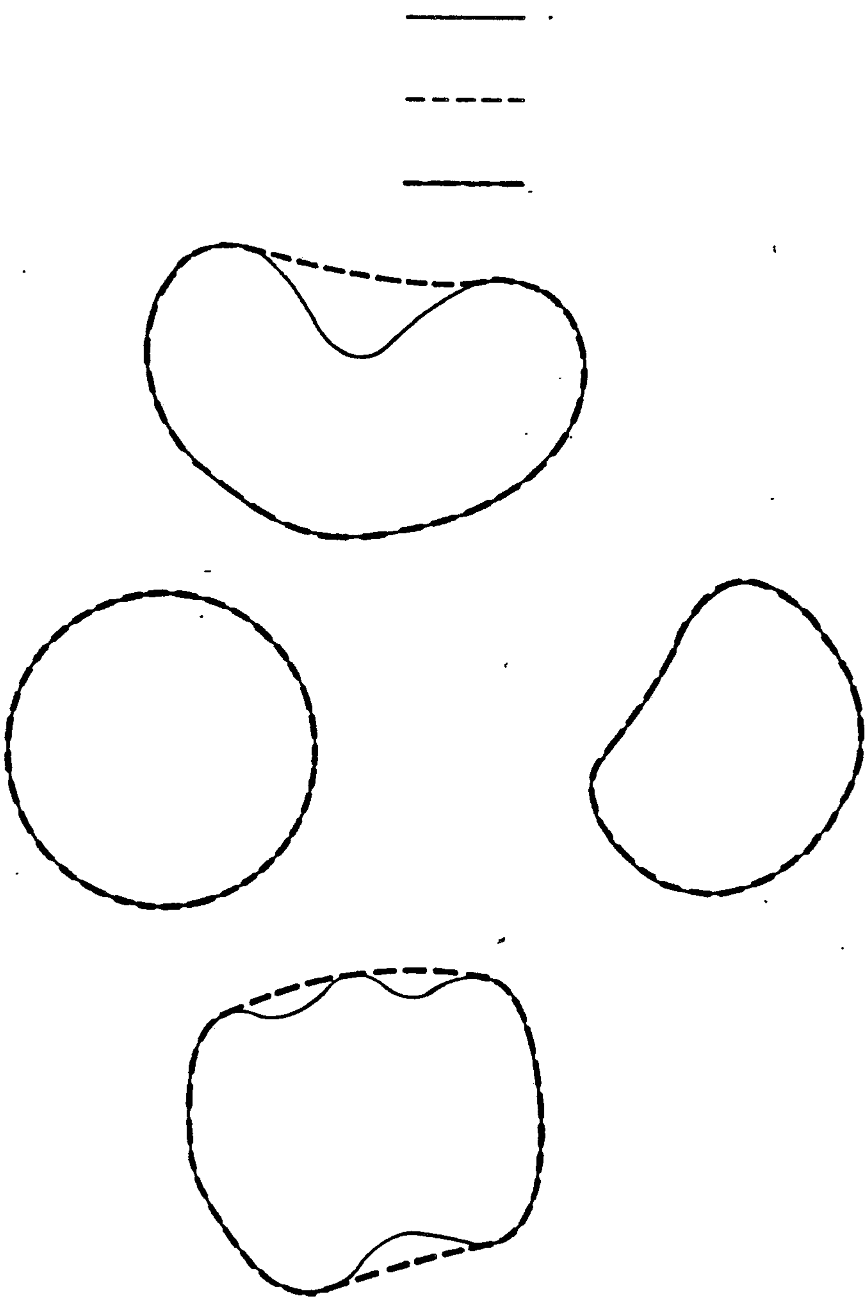

FIG. 4